# EUROPÄISCHE PATENTSCHRIFT

(11) **EP 0 577 556 B1**
(45) Veröffentlichungstag und Bekanntmachung des Hinweises auf die Patenterteilung: **15.01.1997**
(21) Anmeldenummer: 93810444.5
(22) Anmeldetag: 22.06.1993
(51) Int. Cl.: D06P 3/32, C09B 67/22

(54) **Verfahren zum Trichromiefärben von Leder mit Farbstoffmischungen**
Process for the trichromatic dyeing of leather with dye mixtures
Procédé pour teindre du cuir par trichromie avec des mélanges de colorants

(30) Priorität: 30.06.1992 CH 2039/92
(43) Veröffentlichungstag der Anmeldung: 05.01.1994
(73) Patentinhaber: Ciba SC Holding AG, 4057 Basel (CH)
(72) Erfinder: Moser, Peter, Dr., CH-4102 Binningen (CH); Page, Campbell Thomas, Dr., D-7859 Efringen-Kirchen (DE); Püntener, Alois, Dr., CH-4310 Rheinfelden (CH)

(56) Entgegenhaltungen:
- EP-A- 0 034 724
- EP-A- 0 074 510
- EP-A- 0 168 961
- EP-A- 0 253 932
- EP-A- 0 316 278
- EP-A- 0 433 229
- EP-A- 0 468 922
- CH-A- 160 674
- GB-A- 2 226 336
- Colour Index, 3. Aufl., Band 4, J.S.D.C., Bradford, GB, Seite 4467, Absatz 51320

## Beschreibung

Die vorliegende Erfindung betrifft ein Verfahren zum Färben von Leder mit Farbstoffmischungen, insbesondere ein Verfahren zum Trichromiefärben von Leder, sowie das nach dem Verfahren gefärbte Leder.

Verfahren zum Färben von Leder mit Farbstoffmischungen, auch das Trichromiefärben von Leder, sind bereits bekannt und werden auch in der Praxis mit grossem Erfolg angewendet. Die bekannten Farbstoffmischungen sind jedoch zum Färben in brillanten Farbtönen nur bedingt geeignet und das Trichromiefärben von Leder in brillanten Tönen ist mit den bekannten Farbstoffmischungen bisher nicht möglich. Beim Trichromiefärben werden nämlich besondere Anforderungen an die Kombinierbarkeit der verwendeten Farbstoffe gestellt, um einen gleichmässigen Farbaufbau zur Erzielung nuancenkonstanter, reproduzierbarer Färbungen in unterschiedlichen Konzentrationen zu gewährleisten. Ausserdem sollten die genannten Bedingungen für Ledersorten verschiedener Herkunft und unterschiedlicher Vorbehandlung erfüllt sein.

In der GB-A-2 226 336 sind bereits Farbstoffmischungen zum Trichromiefärben von Leder beschrieben. Die verwendeten Farbstoffe sind jedoch völlig verschieden von den in dem vorliegenden Patentgesuch eingesetzten Farbstoffen.

Der vorliegenden Erfindung lag die Aufgabe zugrunde, ein Verfahren zum Färben von Leder mit Farbstoffmischungen zur Verfügung zu stellen, nach dem das Färben in brillanten Nuancen möglich ist. Besonders geeignete Farbstoffmischungen sollten darüber hinaus auch das Trichromiefärben von Leder in brillanten Tönen ermöglichen.

Diese Aufgabe wird durch das erfindungsgemässe Verfahren gelöst.

Gegenstand der Erfindung ist somit ein Verfahren zum Färben von Leder mit Farbstoffmischungen, welches dadurch gekennzeichnet ist, dass man eine Mischung aus mindestens zwei metallfreien Farbstoffen verwendet, ausgewählt aus der Gruppe, bestehend aus
a) einem gelben Farbstoff der Formel 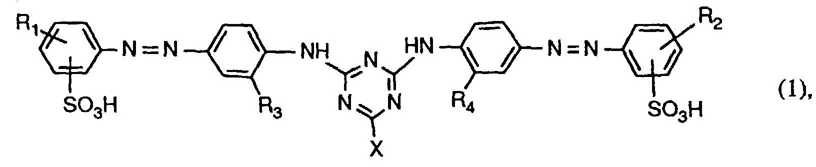 worin
   R₁ und R₂ unabhängig voneinander je Wasserstoff, C₁-C₄-Alkyl oder C₁-C₄-Alkoxy,
   R₃ und R₄ unabhängig voneinander je C₁-C₄-Alkyl oder C₁-C₄-Alkoxy und X Halogen oder 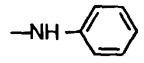 bedeutet, wobei der Phenylrest unsubstituiert oder durch C₁-C₄-Alkyl oder C₁-C₄-Alkoxy substituiert ist,
b) einem roten Farbstoff der Formel 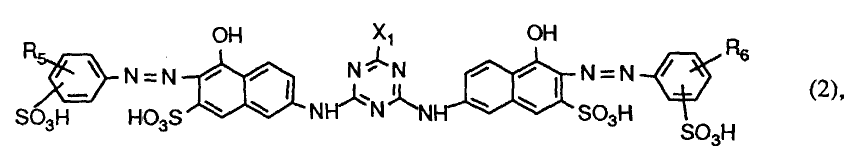 worin
   R₅ und R₆ unabhängig voneinander je Wasserstoff, C₁-C₄-Alkyl oder C₁-C₄-Alkoxy und X₁ Halogen oder 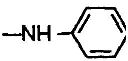 bedeutet, wobei der Phenylrest unsubstituiert oder durch C₁-C₄-Alkyl oder C₁-C₄-Alkoxy substituiert ist, oder der Formel 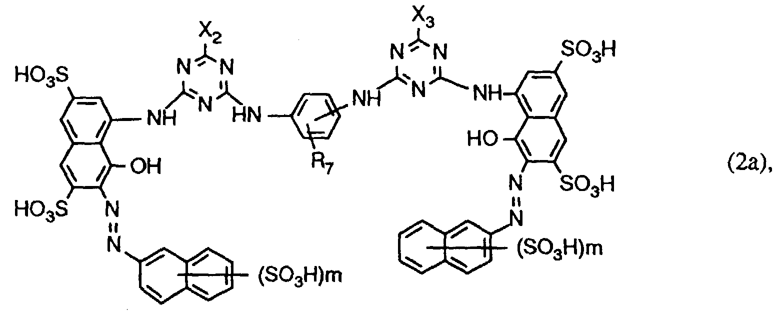 worin
   X₂ und X₃ unabhängig voneinander je Halogen oder 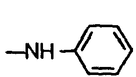 bedeuten, wobei der Phenylrest unsubstituiert oder durch C₁-C₄-Alkyl oder C₁-C₄-Alkoxy substituiert ist,
   R₇ Wasserstoff, C₁-C₄-Alkyl oder C₁-C₄-Alkoxy und
   m 1 oder 2 bedeuten, und
c) einem blauen Farbstoff der Formel 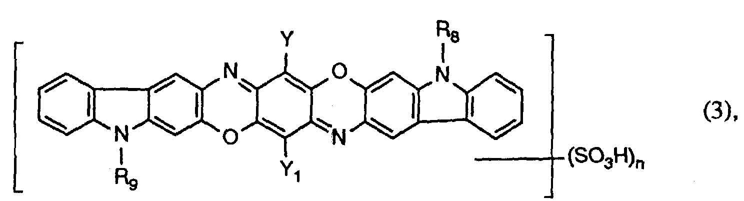 worin
   n 3 oder 4,
   R₈ und R₉ unabhängig voneinander je Wasserstoff oder C₁-C₄-Alkyl und
   Y und Y₁ unabhängig voneinander je Wasserstoff, Halogen, C₁-C₄-Alkyl, C₁-C₄-Alkoxy, Phenyl oder Phenoxy bedeuten, wobei der Phenylrest in den letzten beiden Gruppen durch C₁-C₄-Alkyl oder C₁-C₄-Alkoxy substituiert sein kann.

Die Alkylgruppen können linear oder verzweigt sein. Als C₁-C₄-Alkyl kommen somit Methyl, Ethyl, n- oder iso-Propyl sowie n-, iso-, sec.- oder tert.-Butyl in Betracht. Bevorzugt unter diesen sind Methyl und Ethyl.

Halogen bedeutet Fluor, Brom, Jod oder vor allem Chlor.

Geeignete Alkoxyreste sind z.B. Methoxy, Ethoxy, Propoxy, iso-Propoxy, n-Butoxy, iso-Butoxy oder tert.-Butoxy, vorzugsweise jedoch Methoxy oder Ethoxy.

Zum Trichromiefärben nach dem erfindungsgemässen Verfahren verwendet man vorzugsweise eine Farbstoffmischung, enthaltend einen gelben Farbstoff der Formel (1), einen roten Farbstoff der Formel (2) oder (2a) und einen blauen Farbstoff der Formel (3).

Bei den Farbstoffen der Formel (1) bedeutet R₁ vorzugsweise das gleiche wie R₂, insbesondere bedeuten beide je Wasserstoff, Methyl oder Methoxy, vor allem Wasserstoff.

Ausserdem ist die Verwendung solcher Farbstoffe der Formel (1) bevorzugt, bei denen sich die beiden Sulfogruppen in m-Stellung zu den Azogruppen befinden.

X bedeutet bei den Farbstoffen der Formel (1) vor allem Chlor und insbesondere Phenylamino.

Eine besonders bevorzugte Ausführungsform des erfindungsgemässen Verfahrens besteht darin, dass man den gelben Farbstoff der Formel 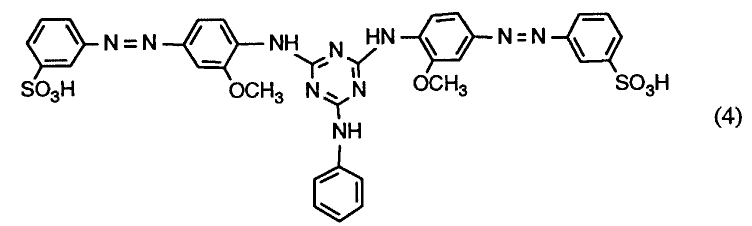 verwendet.

Eine weitere bevorzugte Ausführungsform des erfindungsgemässen Verfahrens ist dadurch gekennzeichnet, dass man einen roten Farbstoff der Formel (2) verwendet, worin R₅ das gleiche bedeutet wie R₆, vorzugsweise beide je Wasserstoff, Methyl oder Methoxy, vor allem Methoxy.

Ausserdem ist die Verwendung solcher Farbstoffe der Formel (2) bevorzugt, bei denen sich die beiden Sulfogruppen in o-Stellung zu den Azogruppen befinden.

X₁ bedeutet vor allem Phenylamino oder durch Methyl, Ethyl, Methoxy oder Ethoxy substituiertes Phenylamino. Die besonders bevorzugte Bedeutung von X₁ ist Methoxyphenylamino.

Eine weitere bevorzugte Ausführungsform des erfindungsgemässen Verfahrens ist dadurch gekennzeichnet, dass man einen roten Farbstoff der Formel (2a) verwendet, worin R₇ Wasserstoff bedeutet.

Ausserdem ist die Verwendung solcher Farbstoffe der Formel (2a) bevorzugt, bei denen die beiden Triazinaminogruppen in p-Stellung an den durch R₇ substituierten Phenylenrest gebunden sind.

X₂ und X₃ sind vorzugsweise gleich und bedeuten vor allem beide Chlor und m bedeutet vor allem 2.

Eine besonders bevorzugte Ausführungsform des erfindungsgemässen Verfahrens besteht darin, dass man den roten Farbstoff der Formel 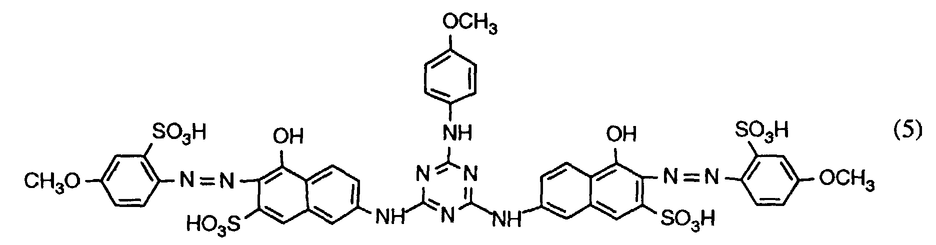 oder 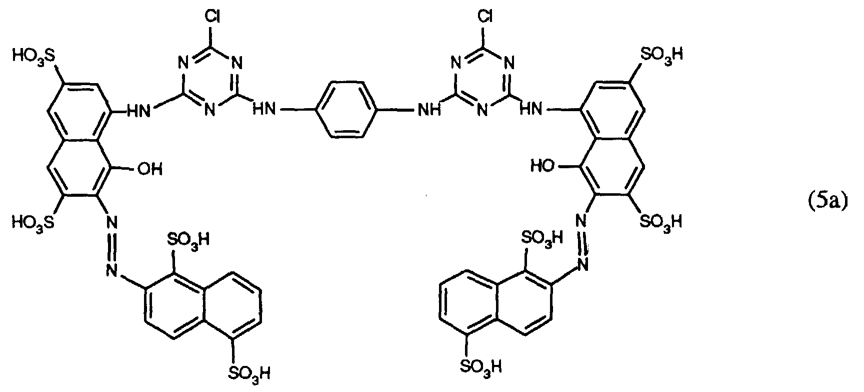 verwendet.

Eine weitere bevorzugte Ausführungsform des erfindungsgemässen Verfahrens ist dadurch gekennzeichnet, dass man einen blauen Farbstoff der Formel (3) verwendet, worin R₈ und R₉ je C₁-C₂-Alkyl bedeuten.

Ausserdem ist die Verwendung solcher Farbstoffe der Formel (3) bevorzugt, worin Y und Y₁ je Halogen, vor allem Chlor, bedeuten sowie solcher Farbstoffe der Formel (3), worin n 3 bedeutet.

Eine ganz besonders bevorzugte Ausführungsform des erfindungsgemässen Verfahrens besteht darin, dass man den blauen Farbstoff der Formel 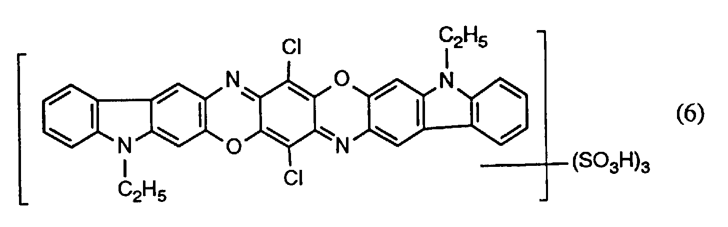 verwendet.

Eine ganz besonders wichtige Ausführungsform des erfindungsgemässen Verfahrens besteht darin, dass man zum Trichromiefärben eine Farbstoffmischung, enthaltend den gelben Farbstoff der Formel (4), den roten Farbstoff der Formel (5) und den blauen Farbstoff der Formel (6), verwendet.

Zusätzlich zu den Farbstoffen der Formeln (1), (2), (2a) oder (3) kann man im erfindungsgemässen Färbeverfahren noch weitere Farbstoffe einsetzen. Dies kann z.B. zweckmässig sein, wenn die mit den genannten Farbstoffen erreichbare Nuance truber oder dunkler oder in etwas geändertem Farbton ausfallen soll. Vorzugsweise setzt man als weitere Farbstoffe solche ein, die zwei oder drei Sulfogruppen aufweisen.

Wegen der guten Kombinierbarkeit mit den Farbstoffen der Formeln (1), (2), (2a) oder (3) verwendet man als zusätzliche Farbstoffe vor allem braune Farbstoffe der Formel 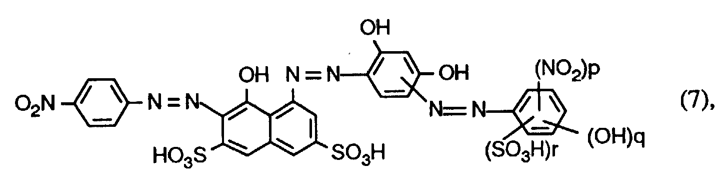 worin p 1 oder 2 und q und r unabhängig voneinander je 0 oder 1 bedeuten, oder der Formel 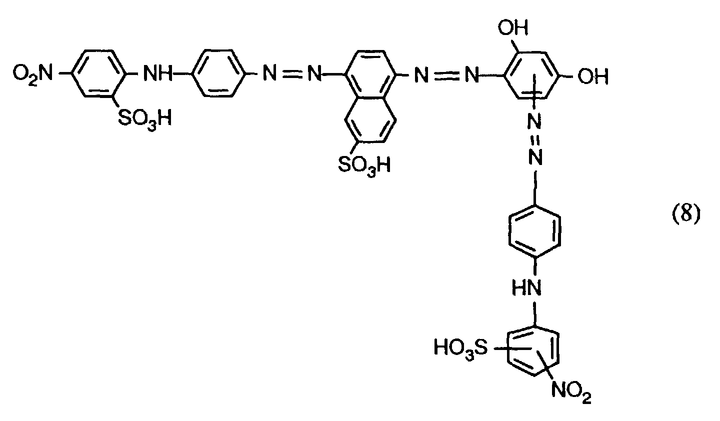 oder schwarze Farbstoffe der Formel 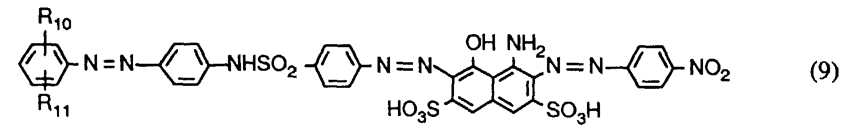 oder 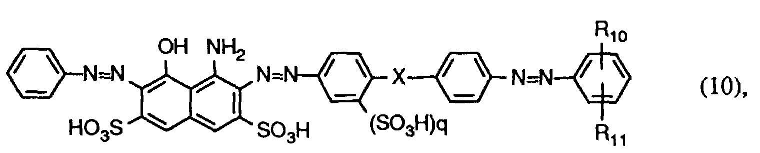 worin R₁₀ und R₁₁ unabhängig voneinander je OH oder NH₂, X -NH- oder -NHCO- und q 0 oder 1 bedeuten.

Als zusätzliche Farbstoffe verwendet man vorzugsweise braune Farbstoffe der Formel 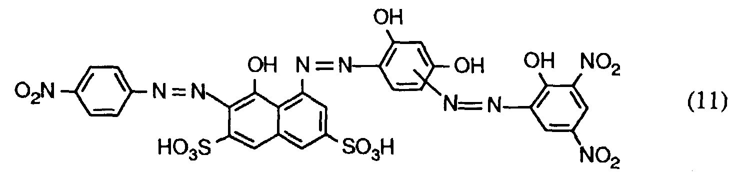 oder 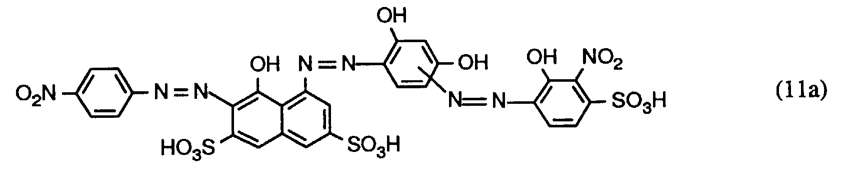 oder 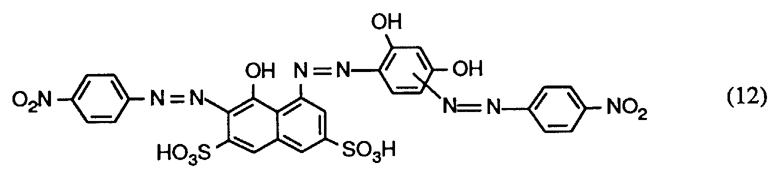 oder 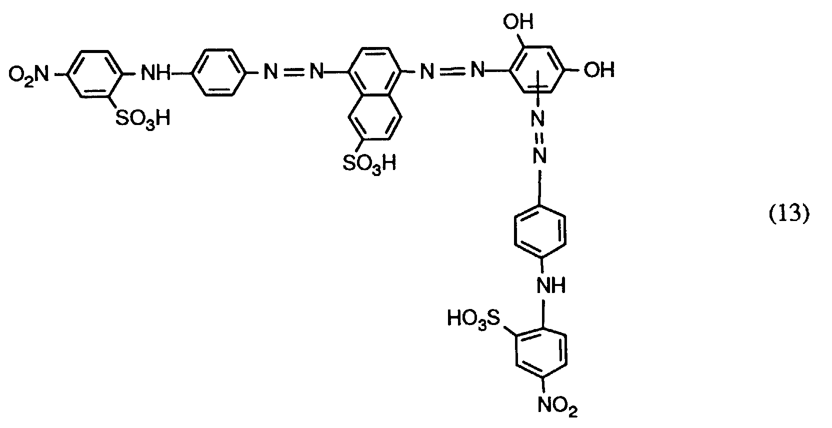 oder schwarze Farbstoffe der Formel 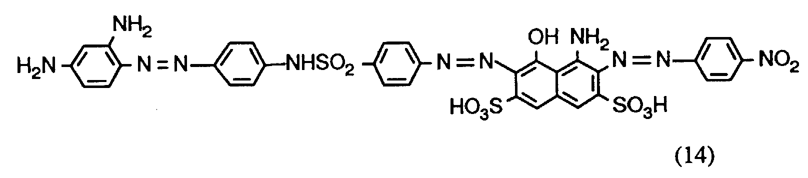 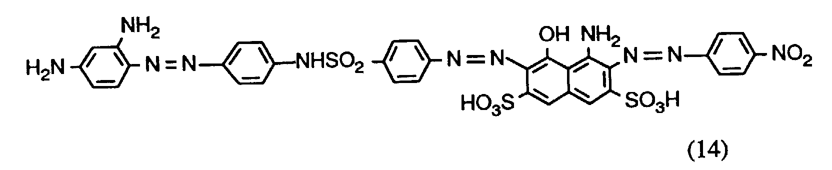 oder 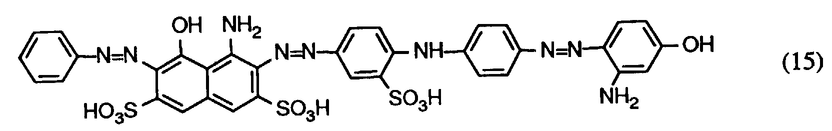 oder

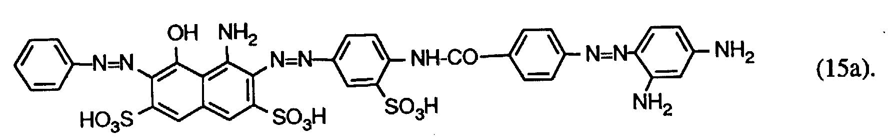

Die erfindungsgemässen Farbstoffe sind anionischer Natur und werden vorteilhaft in Form ihrer Salze, insbesondere Alkalisalze oder Ammoniumsalze, eingesetzt. Als Alkalisalze kommen vor allem die Lithium-, Kalium- oder Natriumsalze in Betracht und unter Ammoniumsalzen sind auch Salze organischer Amine zu verstehen, z.B. solcher, die mit C₁-C₆-Alkyl- oder Hydroxy-C₁-C₆-alkylgruppen substituiert sind.

Die im erfindungsgemässen Verfahren verwendeten Farbstoffe sind bekannt oder können auf an sich bekannte Art und Weise hergestellt werden.

Die Mengen, in denen die erfindungsgemäss verwendeten Farbstoffe in den Färbebädern eingesetzt werden, können je nach der gewünschten Farbtiefe in weiten Grenzen schwanken. Im allgemeinen sind Farbstoffmengen von 0,1 bis 10, vorzugsweise 0,5 bis 4 Gew.%, bezogen auf das Gewicht des zu färbenden Leders, vorteilhaft.

Neben Wasser und den Farbstoffen kann die Färbeflotte noch weitere Zusätze enthalten, z.B. Säuren, Basen oder Salze zur Einstellung des gewünschten pH-Wertes, sowie Hilfsmittel, wie z.B. Netzmittel, Fettungsmittel, farbvertiefende Hilfsmittel, Egalisiermittel, Penetrationsmittel und/oder Antischaummittel.

Das erfindungsgemässe Verfahren weist den grossen Vorteil auf, dass es nicht nur für einen bestimmten Ledertyp geeignet ist, sondern für verschiedene Ledertypen, beispielsweise für Chromleder, nachgegerbte Leder oder Velourleder von Ziege, Rind oder Schwein.

Das Färben erfolgt vorzugsweise nach dem Ausziehverfahren, z.B. bei einem Flottenverhältnis von 1:1,5 bis 1:20, vorzugsweise 1:2 bis 1:10, und bei Temperaturen von 20 bis 100° C, vorzugsweise 30 bis 60° C. Falls erwünscht oder erforderlich, kann das Leder einer Vorbehandlung unterworfen werden, beispielsweise einer Neutralisation oder Walke.

Die Färbedauer schwankt je nach Art des Leders und der gewünschten Farbtiefe, liegt im allgemeinen jedoch zwischen 30 und 180 Minuten. Im Anschluss an die Färbung wird das Leder gespült und wie üblich fertiggestellt.

Man erhält nach dem erfindungsgemässen Verfahren Lederfärbungen in brillanten Farbtönen und mit guten Echtheiten, wie z.B. Licht- und Nassechtheiten. Da die einzelnen Farbstoffe etwa gleich tief in das Leder eindringen, ist die Nuance der Färbungen an der Oberfläche und in tieferen Schichten des Leders gleich.

Für den Einsatz zum Farben werden die einzelnen Farbstoffe miteinander vermischt. Die Farbstoffe können dabei einzeln als Stammlösungen für das Färbeverfahren vorbereitet oder zusammen in eine einzige Stammlösung formuliert werden.

Ein weiterer Gegenstand der Erfindung sind Farbstofftrichromie-Mischungen, enthaltend mindestens einen gelben Farbstoff der Formel (1), mindestens einen roten Farbstoff der Formel (2) oder (2a) und mindestens einen blauen Farbstoff der Formel (3).

Bevorzugte Farbstofftrichromie-Mischungen enthalten 1 bis 98 Gew.% eines gelben Farbstoffes der Formel (1), 1 bis 98 Gew.% eines roten Farbstoffes der Formel (2) oder (2a) und 1 bis 98 Gew.% eines blauen Farbstoffes der Formel (3), insbesondere 10 bis 70 Gew.% eines gelben Farbstoffes der Formel (1), 10 bis 50 Gew.% eines roten Farbstoffes der Formel (2) und 10 bis 50 Gew.% eines blauen Farbstoffes der Formel (3).

Die nachfolgenden Beispiele veranschaulichen die Erfindung, ohne sie darauf zu beschränken. Teile bedeuten Gewichtsteile und Prozente Gewichtsprozente. Die Farbstoffe werden in handelsüblicher Pulver- oder Flüssigform eingesetzt; die angegebenen Farbstoffmengen beziehen sich auf die coupierte 100%ige Farbstoff-Handelsform.

Beispiel 1: 100 Teile chromgegerbtes Rindleder (Falzgewicht) werden 15 Minuten lang in 300 Teilen Wasser bei 30°C gewaschen und anschliessend 60 Minuten in einer aus 300 Teilen Wasser, 2 Teilen Neutralisationsmittel (Na- Salze aromatischer Sulfosäuren und aliphatischer Dicarbonsäuren) und 0,5 Teilen Natriumbicarbonat bestehenden Flotte bei 30°C neutralisiert. Anschliessend folgt eine 15 Minuten dauernde Waschoperation in 300 Teilen Wasser bei Raumtemperatur.

Das derart behandelte Leder wird nun in einer frisch angesetzten Flotte aus 300 Teilen Wasser und 0,79 Teilen der Farbstoffmischung, bestehend aus 0,39 Teilen des gelben Farbstoffes der Formel 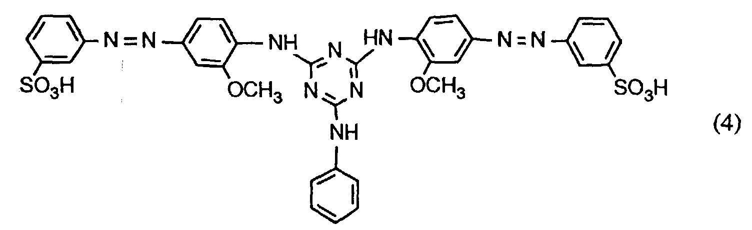 und 0,40 Teilen des blauen Farbstoffes der Formel

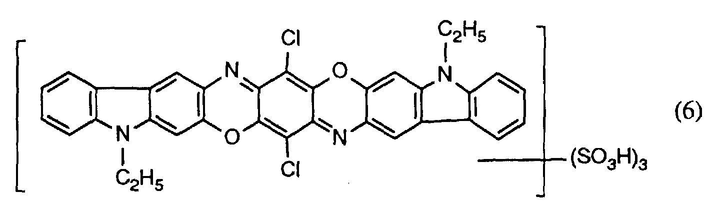

30 Minuten bei 50°C gefärbt. Dann werden der Färbeflotte 3 Teile eines synthetischen Fettungsmittels (Zubereitung auf Basis von sulfonierten aliphatischen Kohlenwasserstoffen, Fettsäuren und deren Derivate) und nach weiteren 30 Minuten 0,5 Teile 85 %ige Ameisensäure zugesetzt Man färbt noch 30 Minuten bei unveränderter Temperatur weiter und stellt das gefärbte Leder nach dem Spülen wie üblich fertig.

Man erhält ein egales grüngefärbtes Leder mit guten Echtheiten und reiner Nuance. Die Kombinierbarkeit der verwendeten Farbstoffe ist besonders gut Wenn die Lederoberfläche leicht angeschliffen wird, sieht man, dass beide Farbstoffe Leder gleich tief eingefärbt haben.

Beispiel 2: 100 Teile Chromrindleder (Falzgewicht) werden nach den Angaben im Beispiel 1 neutralisiert und dann bei 30°C in gleicher Flotte mit 7 Teilen eines flüssigen synthetischen Nachgerbstoffes (Kondensationsprodukte von polyphenolischen Sulfosäuren mit Formaldehyd und Harnstoff) weitere 60 Minuten behandelt Danach folgt ein Waschprozess von 15 Minuten Dauer in 300 Teilen Wasser bei Raumtemperatur. Dieses nachgegerbte Chromrindleder wird anschliessend bei 50° C in einer Flotte, bestehend aus 300 Teilen Wasser sowie 1,58 Teilen der im Beispiel 1 eingesetzten Farbstoffmischung, gefärbt Nach einer Färbedauer von 30 Minuten erfolgt ein Zusatz von 3 Teilen des synthetischen Fettungsmittels aus Beispiel 1 und nach weiteren 30 Minuten eine Zugabe von 1 Teil 85 %iger Ameisensäure. Nach dem Ansäuern wird die Behandlung noch 30 Minuten bei 50°C fortgesetzt Anschliessend wird in kaltem Wasser gespült und fertiggestellt. Die erhaltene reine grüne Färbung zeichnet sich durch gute Echtheitseigenschaften und eine reine Nuance aus. Die Kombinierbarkeit der Farbstoffe ist auch auf diesem Leder sehr gut, was wie im Beispiel 1 geprüft wird. Ausserdem stimmt die Färbung im Farbton weitgehend überein mit der nach Beispiel 1 auf nicht nachgegerbtem Chromrindleder mit der gleichen Farbstoffmischung erhalten Ausfärbung.

Beispiel 3: Arbeitet man wie im Beispiel 2 beschrieben, verwendet jedoch anstelle des dort eingesetzten Nachgerbstoffs 3 Teile eines stark anionischen Nachgerbstoffs (Formaldehyd-Kondensationsprodukt von phenolischen Sulfosäuren), so erhält man Leder mit einer sehr anionischen Oberfläche.
Die erhaltene Färbung stimmt vom Farbton her weitgehend überein mit derjenigen auf nicht nachgegerbtem Chromrindleder nach Beispiel 1 und derjenigen auf nachgegerbtem Chromrindleder nach Beispiel 2.

Beispiel 4: Arbeitet man wie im Beispiel 1 beschrieben, verwendet jedoch anstelle der dort eingesetzten Farbstoffmischung 0,72 Teile einer Farbstoffmischung, bestehend aus 0,22 Teilen des gelben Farbstoffs der Formel (4), 0,33 Teilen des blauen Farbstoffs der Formel (6) und 0,17 Teilen des roten Farbstoffs der Formel 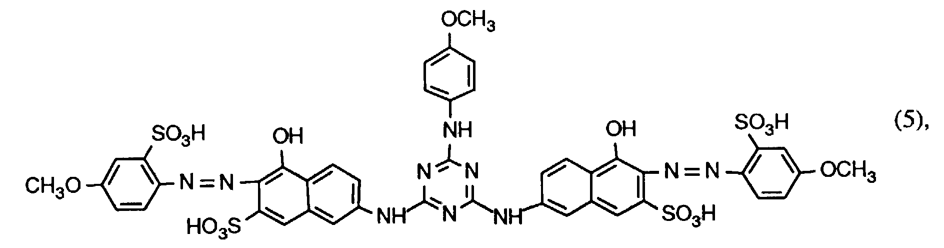 so erhält man mittelbraun gefärbtes Leder.

Die Kombinierbarkeit der Farbstoffe ist sehr gut. Wenn die Lederoberfläche leicht angeschliffen wird, sieht man, dass alle Farbstoffe Leder gleich tief färben.

Beispiel 5: Arbeitet man wie im Beispiel 2 beschrieben, verwendet jedoch anstelle der dort eingesetzten Farbstoffmischung 1,44 Teile der im Beispiel 4 eingesetzten Farbstoffmischung, so erhält man eine Färbung, die im Farbton ebenfalls mit der auf nicht nachgegerbtem Chromrindleder nach Beispiel 4 erhaltenen Ausfärbung übereinstimmt

Beispiel 6: 100 Teile Chromrindleder (Falzgewicht) werden nach den Angaben im Beispiel 2 neutralisiert und nachgegerbt und danach in einer Flotte, enthaltend 300 Teile Wasser, 0,52 Teile des Farbstoffes der Formel (4) und 0.54 Teile des Farbstoffes der Formel (6) während 30 Minuten bei 50°C gefärbt Nach 30 Minuten erfolgt ein Zusatz von 3 Teilen des synthetischen Fettungsmittels aus Beispiel 1 und nach weiteren 30 Minuten eine Zugabe von 1 Teil 85 %iger Ameisensäure. Nach dem Ansäuern wird die Behandlung noch 30 Minuten bei 50°C fortgesetzt.

Anschliessend wird in einem frischen Bad noch mit 1 Teil eines farbvertiefenden Hilfsmittel (polyquaternäres Amin-Äthylenoxid-Addukt) in 300 Teilen Wasser das Leder nachbehandelt. Nach einer Behandlungsdauer von 15 Minuten wird dem Färbebad die halbe Menge der obengenannten Farbstoffe zugesetzt und danach 15 Minuten bei 50°C weitergefärbt. Dann erfolgt ein Zusatz von 0,25 Teilen 85 %iger Ameisensäure. Nach weiteren 20 Minuten ist die Färbung beendet Es wird dann in kaltem Wasser gespült

Die wie üblich fertiggestellte Färbung zeichnet sich durch gute Echtheiten und einen vollen, reinen grünen Farbton aus. Sie ist wesentlich voller und stärker als eine entsprechende Färbung ohne das farbvertiefende Hilfsmittel. Gleiche Ergebnisse erhält man auch mit den anderen Farbstoffmischungen aus den Farbstoffen der Formeln (4), (5) und (6).

Beispiel 7: 100 Teile chromgares Bekleidungsveloursleder (Trockengewicht) werden bei 50°C in einer Lösung von 1000 Teilen Wasser und 2 Teilen 24 %igem Ammoniak während 60 Minuten aufgewalkt. Danach folgt ein Waschprozess von 15 Minuten Dauer in 1000 Teilen Wasser von 50°C.

Nach diesen vorbereitenden Operationen wird das Leder in einer Flotte aus 1000 Teilen Wasser, 2 Teilen Ammoniak 24%ig und 6,32 Teilen der im Beispiel 1 eingesetzten Farbstoffmischung bei 50°C gefärbt.

Nach einer Färbedauer von 60 Minuten wird mit 4 Teilen 85 %iger Ameisensäure angesäuert und hierauf noch 20 Minuten weitergefärbt.

Die Fertigstellung des gefärbten Leders erfolgt nach einer Behandlung in frischem Bad mit 1000 Teilen Wasser, 2,5 Teilen eines Kondensationsproduktes aus Formaldehyd, Dicyandiamid, Ammoniumchlorid und Ethylendiamin sowie 0,5 Teilen 85 %iger Ameisensäure während 45 Minuten bei 50°C. Das erhaltene gefärbte Leder besitzt einen reinen grünen Farbton. Es zeichnet sich durch gute Echtheiten und gutes Deckvermögen aus.

Beispiel 8: 100 Teile Chromspaltvelours-Leder (Trockengewicht) werden in 1000 Teilen Wasser und 2 Teilen 24 %igem Ammoniak 60 Minuten lang bei 50°C aufgewalkt und anschliessend mit 1000 Teilen Wasser von 50°C während 15 Minuten gewaschen.

Das derart vorbereitete Leder wird nun in einer frischen Flotte, bestehend aus 1000 Teilen Wasser, 2 Teilen 24%igem Ammoniak und 3,16 Teilen der im Beispiel 1 eingesetzten Farbstoffmischung, bei 50°C gefärbt. Nach 60 Minuten fügt man noch 4 Teile 85 %ige Ameisensäure hinzu und färbt weitere 20 Minuten bei dieser Temperatur.

Das gefärbte Leder wird in kaltem Wasser gespült und fertiggestellt. Man erhält eine reine grüne Färbung, die sich durch gute Echtheiten und Nuancengleichheit zwischen Velours- und Fleischseite auszeichnet

Beispiel 9: Arbeitet man wie im Beispiel 1 beschrieben, verwendet jedoch anstelle der don eingesetzten Farbstoffmischung 0,88 Teile einer Farbstoffmischung, bestehend aus 0,48 Teilen des roten Farbstoffes der Formel 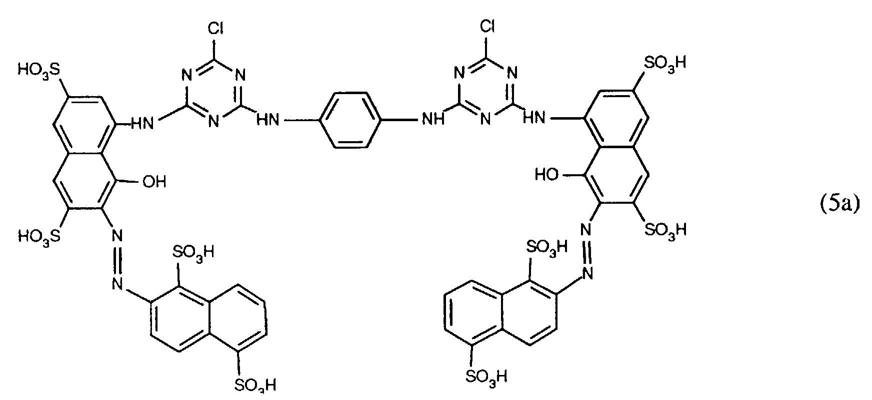 und 0,40 Teile des blauen Farbstoffes der Formel (6), so erhält man ein farbstark violett gefärbtes Leder.

Beispiel 10: Arbeitet man wie im Beispiel 2 beschrieben, verwendet jedoch anstelle der dort eingesetzten Farbstoffmischung 1,76 Teile der im Beispiel 9 eingesetzten Farbstoffmischung, so erhält man eine Färbung, die im Farbton ebenfalls mit der auf nicht nachgegerbtem Chromrindleder nach Beispiel 9 erhaltenen Ausfärbung übereinstimmt.

Beispiel 11: Arbeitet man wie im Beispiel 1 beschrieben, verwendet jedoch anstelle der dort eingesetzten Farbstoffmischung 0,75 Teile einer Farbstoffmischung, bestehend aus 0,25 Teilen des roten Farbstoffes der im Beispiel 4 angegebenen Formel (5) und 0,5 Teilen des blauen Farbstoffes der Formel(6), so erhält man ein farbstark violett gefärbtes Leder.

Beispiel 12: Arbeitet man wie im Beispiel 2 beschrieben, verwendet jedoch anstelle der dort eingesetzten Farbstoffmischung 1,50 Teile der im Beispiel 11 eingesetzten Farbstoffmischung, so erhält man eine Färbung, die im Farbton ebenfalls mit der auf nicht nachgegerbtem Chromrindleder nach Beispiel 11 erhaltenen Ausfärbung übereinstimmt.

Beispiele 13 bis 29: Nach den in den Beispielen 1, 2 und 4 beschriebenen Verfahren erhält man mit dem dort aufgeführten gelben Farbstoff der Formel (4), dem roten Farbstoff der Formel (5) und dem blauen Farbstoff der Formel (6) bei Anwendung in den angegebenen Mengen (Teile) Lederfärbungen in den angegebenen Nuancen.

| Beispiel | Farbstoff (4) | Farbstoff (5) | Farbstoff (6) | Nuance |
|---|---|---|---|---|
| 13 | 0,33 | 0,13 | 0,25 | grünstichig braun |
| 14 | 0,16 | 0,25 | 0,25 | rotstichig braun |
| 15 | 0,40 | 0,05 | 0,30 | grünstichig grau |
| 16 | 0,16 | 0,13 | 0,50 | braun |
| 17 | 0,28 | 0,07 | 0,43 | dunkelgrün |
| 18 | 0,20 | 0,30 | 0,10 | orange-braun |
| 19 | 0,07 | 0,15 | 0,60 | violett |
| 20 | 0,10 | 0,35 | 0,15 | bordeaux |
| 21 | 0,07 | 0,30 | 0,30 | blaustichig bordeaux |
| 22 | 0,44 | 0,17 | ---- | rotstichig orange |
| 23 | 0,33 | 0,25 | ---- | scharlachrot |
| 24 | 0,22 | 0,34 | ---- | neutrales rot |
| 25 | ---- | 0,10 | 0,80 | violett |
| 26 | ---- | 0,30 | 0,40 | rotstichig violett |
| 27 | ---- | 0,40 | 0,20 | blaustichig bordeaux |
| 28 | 0,13 | ---- | 0,80 | blaustichig grün |
| 29 | 0,26 | ---- | 0,60 | grün |

Beispiel 30: Nach den in den Beispielen 1 bis 4 beschriebenen Verfahren erhält man mit 0,25 Teilen des dort aufgeführten roten Farbstoffes der Formel (5), 0,10 Teilen des blauen Farbstoffes der Formel (6) und 1,0 Teilen des im Beispiel 17 verwendeten schwarzen Farbstoffes der Formel (15) Lederfärbungen mit gedeckt violetter Nuance.

Beispiel 31: Nach den in den Beispielen 1 bis 4 beschriebenen Verfahren erhält man mit 0,07 Teilen des dort aufgeführten gelben Farbstoffes der Formel (4), 0,10 Teilen des roten Farbstoffes der Formel (5) und 0,35 Teilen des im Beispiel 13 verwendeten braunen Farbstoffes der Formel (11) und 0,35 Teilen des im Beispiel 13 verwendeten braunen Farbstoffes der Formel (12) Lederfärbungen mit orangebrauner Nuance.

## Patentansprüche

1. Verfahren zum Färben von Leder mit Farbstoffmischungen, dadurch gekennzeichnet, dass man eine Mischung aus mindestens zwei metallfreien Farbstoffen verwendet, ausgewählt aus der Gruppe, bestehend aus
a) einem gelben Farbstoff der Formel 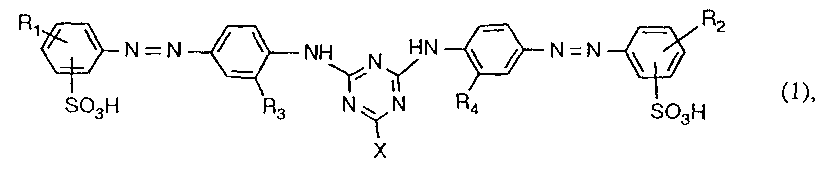 worin
R₁ und R₂ unabhängig voneinander je Wasserstoff, C₁-C₄-Alkyl oder C₁-C₄-Alkoxy, R₃ und R₄ unabhängig voneinander je C₁-C₄-Alkyl oder C₁-C₄-Alkoxy und X Halogen oder 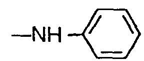 bedeutet, wobei der Phenylrest unsubstituiert oder durch C₁-C₄-Alkyl oder C₁-C₄-Alkoxy substituiert ist,
b) einem roten Farbstoff der Formel 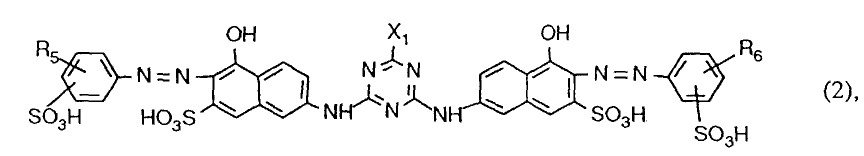 worin
R₅ und R₆ unabhängig voneinander je Wasserstoff, C₁-C₄-Alkyl oder C₁-C₄-Alkoxy und X₁ Halogen oder 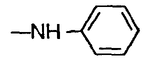 bedeutet, wobei der Phenylrest unsubstituiert oder durch C₁-C₄-Alkyl oder C₁-C₄-Alkoxy substituiert ist, oder der Formel 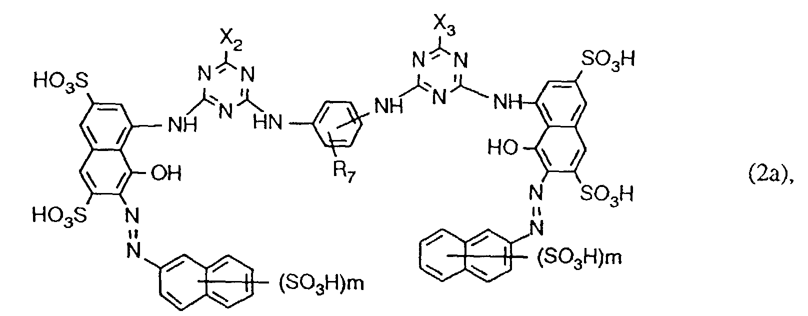 worin
X₂ und X₃ unabhängig voneinander je Halogen oder 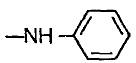 bedeuten, wobei der Phenylrest unsubstituiert oder durch C₁-C₄-Alkyl oder C₁-C₄-Alkoxy substituiert ist, R₇ Wasserstoff, C₁-C₄-Alkyl oder C₁-C₄-Alkoxy und
m 1 oder 2 bedeuten, und
c) einem blauen Farbstoff der Formel 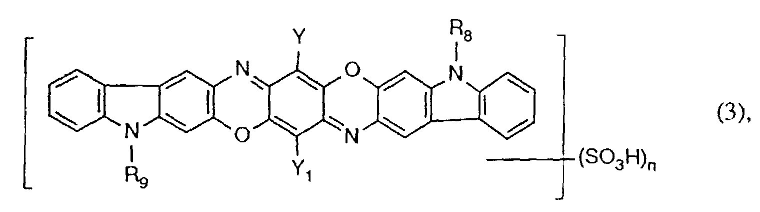 worin
n 3 oder 4,
R₈ und R₉ unabhängig voneinander je Wasserstoff oder C₁-C₄-Alkyl und
Y und Y₁ unabhängig voneinander je Wasserstoff, Halogen, C₁-C₄-Alkyl, C₁-C₄-Alkoxy, Phenyl oder Phenoxy bedeuten, wobei der Phenylrest in den letzten beiden Gruppen durch C₁-C₄-Alkyl oder C₁-C₄-Alkoxy substituiert sein kann.

2. Verfahren gemäss Anspruch 1, dadurch gekennzeichnet, dass man zum Trichromiefärben eine Farbstoffmischung, enthaltend einen gelben Farbstoff der Formel (1), einen roten Farbstoff der Formel (2) oder (2a) und einen blauen Farbstoff der Formel (3), verwendet.

3. Verfahren gemäss Ansprüchen 1 und 2, dadurch gekennzeichnet, dass man einen gelben Farbstoff der Formel (1) verwendet, worin R₁ das gleiche bedeutet wie R₂.

4. Verfahren gemäss einem der Ansprüche 1 bis 3, dadurch gekennzeichnet, dass man einen gelben Farbstoff der Formel (1) verwendet, worin R₁ und R₂ beide Wasserstoff, Methyl oder Methoxy, insbesondere Wasserstoff bedeuten.

5. Verfahren gemäss einem der Ansprüche 1 bis 4, dadurch gekennzeichnet, dass man einen gelben Farbstoff der Formel (1) verwendet, worin sich die beiden Sulfogruppen in m-Stellung zu den Azogruppen befinden.

6. Verfahren gemäss einem der Ansprüche 1 bis 5, dadurch gekennzeichnet, dass man einen gelben Farbstoff der Formel (1) verwendet, worin X Chlor oder vor allem Phenylamino bedeutet.

7. Verfahren gemäss einem der Ansprüche 1 bis 6, dadurch gekennzeichnet, dass man den gelben Farbstoff der Formel 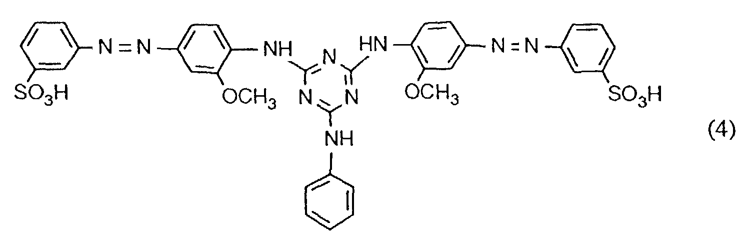 verwendet.

8. Verfahren gemäss einem der Ansprüche 1 bis 7, dadurch gekennzeichnet, dass man einen roten Farbstoff der Formel (2) verwendet, worin R₅ das gleiche bedeutet wie R₆.

9. Verfahren gemäss einem der Ansprüche 1 bis 8, dadurch gekennzeichnet, dass man einen roten Farbstoff der Formel (2) verwendet, worin R₅ und R₆ beide Wasserstoff, Methyl oder Methoxy, vor allem Methoxy bedeuten.

10. Verfahren gemäss einem der Ansprüche 1 bis 9, dadurch gekennzeichnet, dass man einen roten Farbstoff der Formel (2) verwendet, worin sich die beiden Sulfogruppen in o-Stellung zu den Azogruppen befinden.

11. Verfahren gemäss einem der Ansprüche 1 bis 10, dadurch gekennzeichnet, dass man einen roten Farbstoff der Formel (2) verwendet, worin X₁ Phenylamino oder durch Methyl, Ethyl, Methoxy oder Ethoxy substituiertes Phenylamino, insbesondere Methoxyphenylamino bedeutet.

12. Verfahren gemäss einem der Ansprüche 1 bis 7, dadurch gekennzeichnet, dass man einen roten Farbstoff der Formel (2a) verwendet, worin R₇ Wasserstoff bedeutet.

13. Verfahren gemäss einem der Ansprüche 1 bis 7 oder 12, dadurch gekennzeichnet, dass man einen roten Farbstoff der Formel (2a) verwendet, worin die beiden Triazinaminogruppen in p-Stellung an den durch R₇ substituierten Phenylenrest gebunden sind.

14. Verfahren gemäss einem der Ansprüche 1 bis 7, 12 oder 13, dadurch gekennzeichnet, dass man einen roten Farbstoff der Formel (2a) verwendet, worin X₂ und X₃ gleich sind.

15. Verfahren gemäss einem der Ansprüche 1 bis 7 oder 12 bis 14, dadurch gekennzeichnet, dass man einen roten Farbstoff der Formel (2a) verwendet, worin X₂ und X₃ je Chlor bedeuten.

16. Verfahren gemäss einem der Ansprüche 1 bis 7 oder 12 bis 15, dadurch gekennzeichnet, dass man einen roten Farbstoff der Formel (2a) verwendet, worin m 2 bedeutet.

17. Verfahren gemäss einem der Ansprüche 1 bis 16, dadurch gekennzeichnet, dass man den roten Farbstoff der Formel 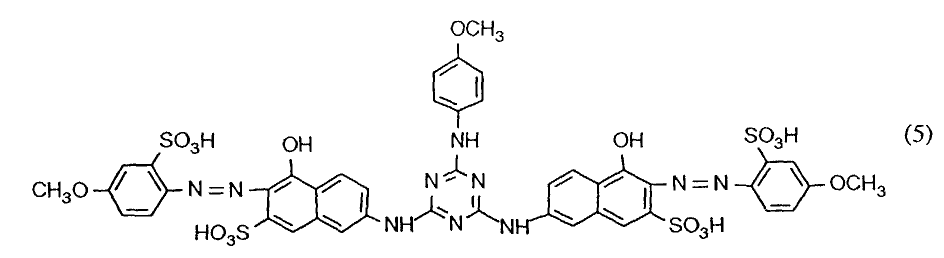 oder 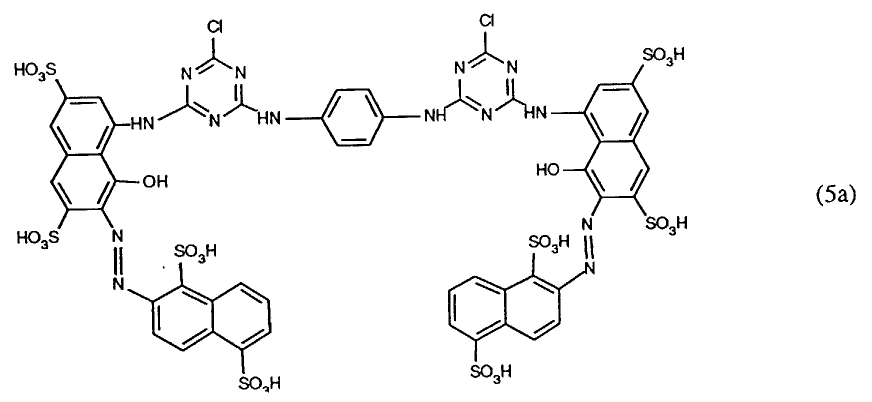 verwendet.

18. Verfahren gemäss einem der Ansprüche 1 bis 17, dadurch gekennzeichnet, dass man einen blauen Farbstoff der Formel (3) verwendet, worin R₈ und R₉ je C₁-C₂-Alkyl bedeuten.

19. Verfahren gemäss einem der Ansprüche 1 bis 18, dadurch gekennzeichnet, dass man einen blauen Farbstoff der Formel (3) verwendet, worin Y und Y₁ je Halogen, vor allem Chlor bedeuten.

20. Verfahren gemäss einem der Ansprüche 1 bis 19, dadurch gekennzeichnet, dass man einen blauen Farbstoff der Formel (3) verwendet, worin n 3 bedeutet

21. Verfahren gemäss einem der Ansprüche 1 bis 20, dadurch gekennzeichnet, dass man den blauen Farbstoff der Formel 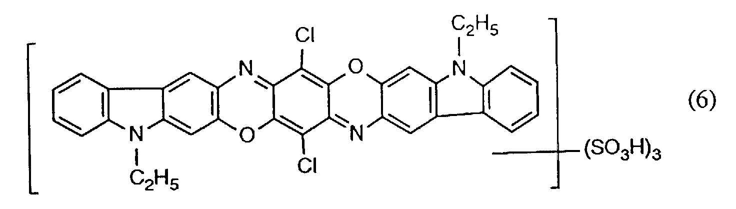 verwendet.

22. Verfahren gemäss einem der Ansprüche 1 bis 21, dadurch gekennzeichnet, dass man zusätzlich einen braunen Farbstoff der Formel 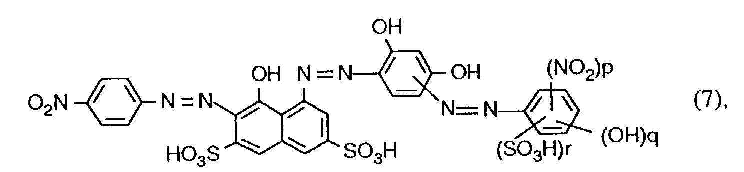 worin p 1 oder 2 und q und r unabhängig voneinander je 0 oder 1 bedeuten, oder einen braunen Farbstoff der Formel 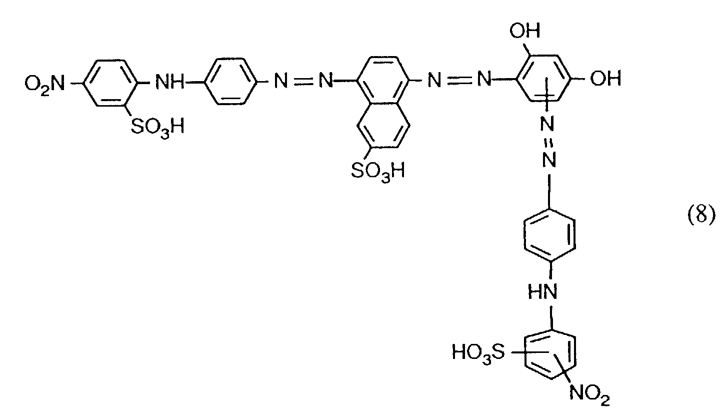 verwendet.

23. Verfahren gemäss einem der Ansprüche 1 bis 21, dadurch gekennzeichnet, dass man zusätzlich einen schwarzen Farbstoff der Formel 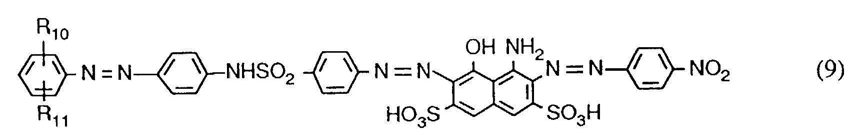 oder 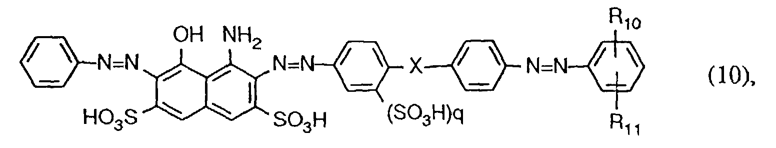 worin R₁₀ und R₁₁ unabhängig voneinander je OH oder NH₂, X -NH- oder -NHCO- und q 0 oder 1 bedeuten, verwendeL

24. Verfahren gemäss Anspruch 22, dadurch gekennzeichnet, dass man zusätzlich einen braunen Farbstoff der Formel 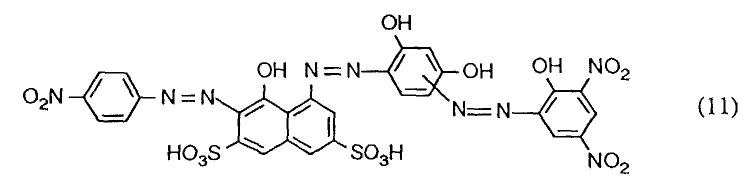 oder 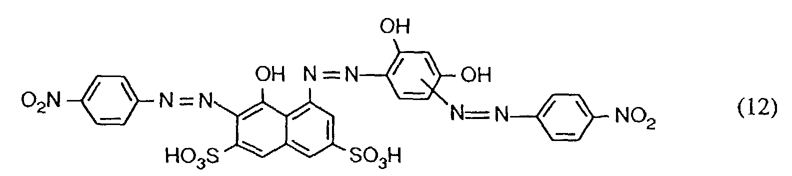 oder 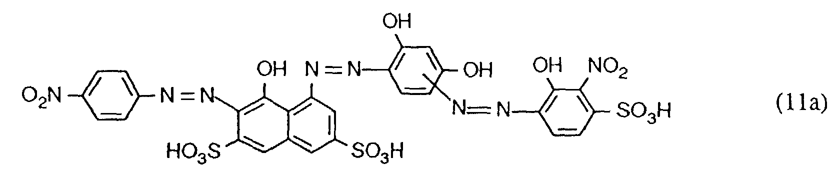 oder 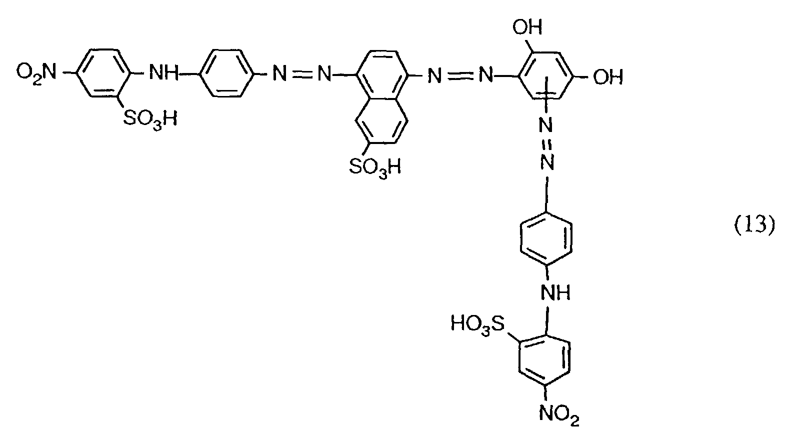 verwendet

25. Verfahren gemäss Anspruch 23, dadurch gekennzeichnet, dass man zusätzlich einen schwarzen Farbstoff der Formel 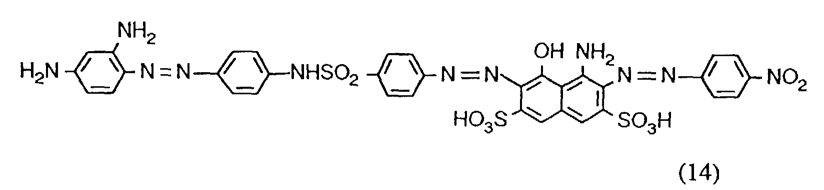 oder 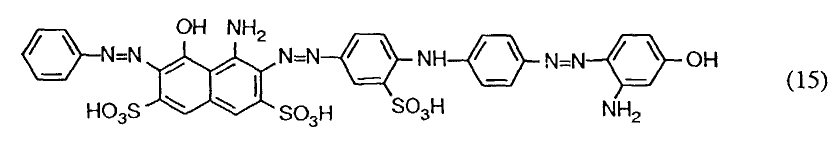 oder 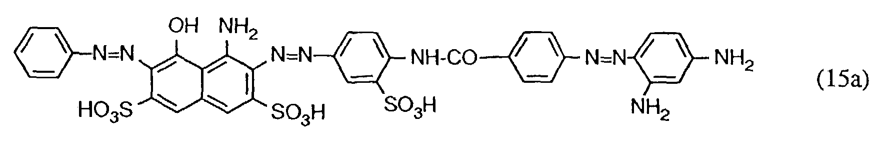 verwendet

26. Verfahren gemäss den Ansprüchen 1, 2, 7, 17 und 21, dadurch gekennzeichnet, dass man zum Trichromiefärben eine Farbstoffmischung, enthaltend den gelben Farbstoff der Formel (4), den roten Farbstoff der Formel (5) und den blauen Farbstoff der Formel (6), verwendet.

27. Verfahren gemäss einem der Ansprüche 1 bis 26, dadurch gekennzeichnet, dass man eine Färbeflotte verwendet, welche zusätzlich ein farbvertiefendes Hilfsmittel enthält.

28. Verfahren gemäss Anspruch 27, dadurch gekennzeichnet, dass man eine Färbeflotte verwendet, welche als farbvertiefendes Hilfsmittel ein ethoxyliertes Alkylamin enthält

29. Farbstofftrichromie-Mischungen, enthaltend mindestens einen gelben Farbstoff der Formel (1), mindestens einen roten Farbstoff der Formel (2) oder (2a) und mindestens einen blauen Farbstoff der Formel (3) gemäss Anspruch 2.

30. Farbstofftrichromie-Mischungen gemäss Anspruch 29, enthaltend 1 bis 98 Gew.% eines gelben Farbstoffes der Formel (1), 1 bis 98 Gew.% eines roten Farbstoffes der Formel (2) oder (2a) und 1 bis 98 Gew.% eines blauen Farbstoffes der Formel (3).

31. Farbstofftrichromie-Mischungen gemäss Anspruch 30, enthaltend 10 bis 70 Gew.% eines gelben Farbstoffes der Formel (1), 10 bis 50 Gew.% eines roten Farbstoffes der Formel (2) und 10 bis 50 Gew.% eines blauen Farbstoffes der Formel (3).

32. Das nach dem Verfahren gemäss den Ansprüchen 1 bis 28 oder mit den Farbstofftrichromie-Mischungen gemäss den Ansprüchen 29 bis 31 gefärbte Leder.

## Claims

1. A process for the dyeing of leather with dye mixtures, which comprises using a mixture of at least two metal-free dyes which are selected from the group consisting of
a) a yellow dye of the formula 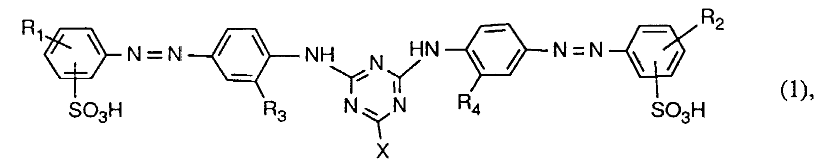 in which
R₁ and R₂, independently of one another, are each hydrogen, C₁-C₄alkyl or C₁-C₄alkoxy, R₃ and R₄, independently of one another, are each C₁-C₄alkyl or C₁-C₄alkoxy and X is halogen or 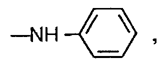 the phenyl radical being unsubstituted or substituted by C₁-C₄alkyl or C₁-C₄alkoxy,
b) a red dye of the formula 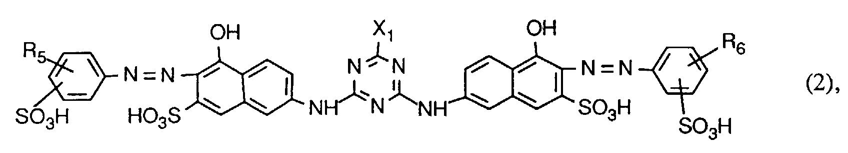 in which
R₅ and R₆, independently of one another, are each hydrogen, C₁-C₄alkyl or C₁-C₄alkoxy and
X₁ is halogen or 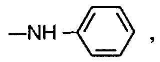 the phenyl radical being unsubstituted or substituted by C₁-C₄alkyl or C₁-C₄alkoxy, or of the formula 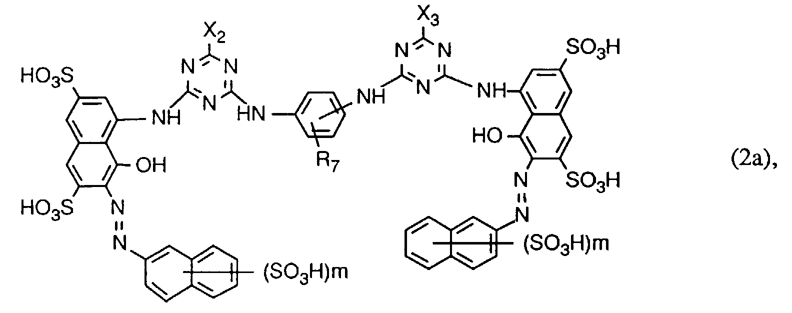 in which
X₂ and X₃, independently of one another, are each halogen or 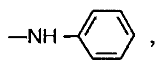 the phenyl radical being unsubstituted or substituted by C₁-C₄alkyl or C₁-C₄alkoxy, R₇ is hydrogen, C₁-C₄alkyl or C₁-C₄alkoxy and
m is 1 or 2, and
c) a blue dye of the formula 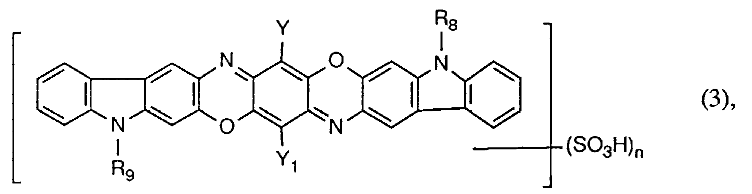 in which
n is 3 or 4,
R₈ and R₉, independently of one another, are each hydrogen or C₁-C₄alkyl and
Y and Y₁, independently of one another, are each hydrogen, halogen, C₁-C₄alkyl, C₁-C₄alkoxy, phenyl or phenoxy, it being possible for the phenyl radical in the last two groups to be substituted by C₁-C₄alkyl or C₁-C₄alkoxy.

2. A process according to claim 1, wherein a dye mixture comprising a yellow dye of the formula (1), a red dye of the formula (2) or (2a) and a blue dye of the formula (3) is used for trichromatic dyeing.

3. A process according to claims 1 and 2, wherein a yellow dye of the formula (1) is used in which R₁ has the same meaning as R₂.

4. A process according to any one of claims 1 to 3, wherein a yellow dye of the formula (1) is used in which R₁ and R₂ are both hydrogen, methyl or methoxy, in particular hydrogen.

5. A process according to any one of claims 1 to 4, wherein a yellow dye of the formula (1) is used in which both sulfo groups are in the m position relative to the azo groups.

6. A process according to any one of claims 1 to 5, wherein a yellow dye of the formula (1) is used in which X is chlorine or, in particular, phenylamino.

7. A process according to any one of claims 1 to 6, wherein the yellow dye of the formula 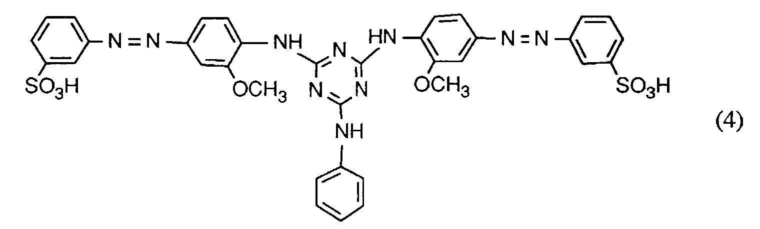 is used.

8. A process according to any one of claims 1 to 7, wherein a red dye of the formula (2) is used in which R₅ has the same meaning as R₆.

9. A process according to any one of claims 1 to 8, wherein a red dye of the formula (2) is used in which R₅ and R₆ are both hydrogen, methyl or methoxy, in particular methoxy.

10. A process according to any one of claims 1 to 9, wherein a red dye of the formula (2) is used in which both sulfo groups are in the o position relative to the azo groups.

11. A process according to any one of claims 1 to 10, wherein a red dye of the formula (2) is used in which X₁ is phenylamino or phenylamino which is substituted by methyl, ethyl, methoxy or ethoxy, in particular methoxyphenylamino.

12. A process according to any one of claims 1 to 7, wherein a red dye of the formula (2a) is used in which R₇ is hydrogen.

13. A process according to any one of claims 1 to 7 or 12, wherein a red dye of the formula (2a) is used in which both triazineamino groups are attached to the R₇-substituted phenylene radical in the p position.

14. A process according to any one of claims 1 to 7, 12, or 13, wherein a red dye of the formula (2a) is used in which X₂ and X₃ are identical.

15. A process according to any one of claims 1 to 7 or 12 to 14, wherein a red dye of the formula (2a) is used in which X₂ and X₃ are each chlorine.

16. A process according to any one of claims 1 to 7 or 12 to 15, wherein a red dye of the formula (2a) is used in which m is 2.

17. A process according to any one of claims 1 to 16, wherein the red dye of the formula 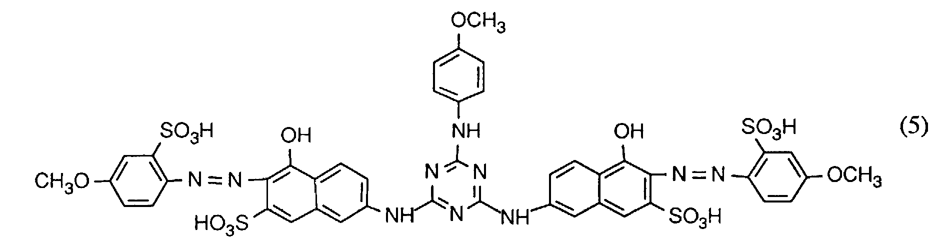 or 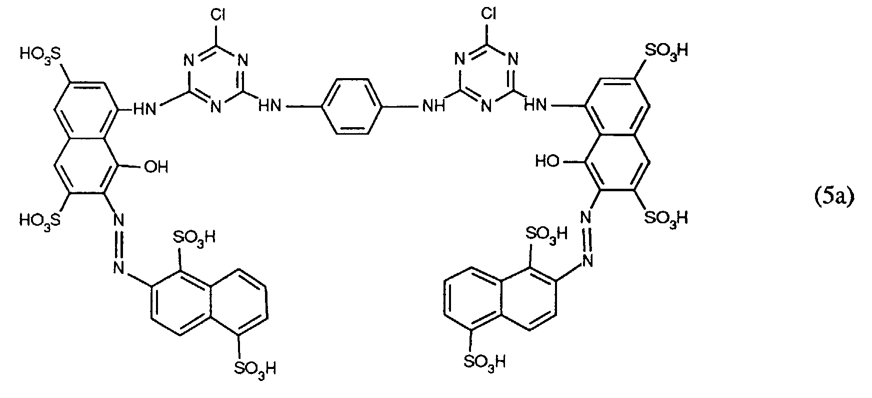 is used.

18. A process according to any one of claims 1 to 17, wherein a blue dye of the formula (3) is used in which R₈ and R₉ are each C₁-C₂alkyl.

19. A process according to any one of claims 1 to 18, wherein a blue dye of the formula (3) is used in which Y and Y₁ are each halogen, in particular chlorine.

20. A process according to any one of claims 1 to 19, wherein a blue dye of the formula (3) is used in which n is 3.

21. A process according to any one of claims 1 to 20, wherein the blue dye of the formula 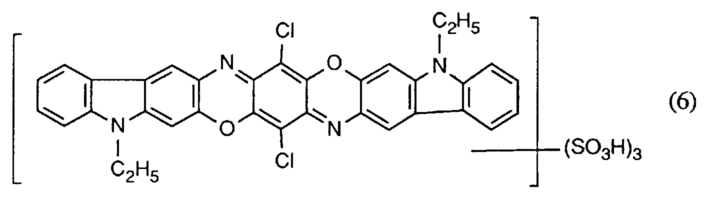 is used.

22. A process according to any one of claims 1 to 21, wherein a brown dye of the formula 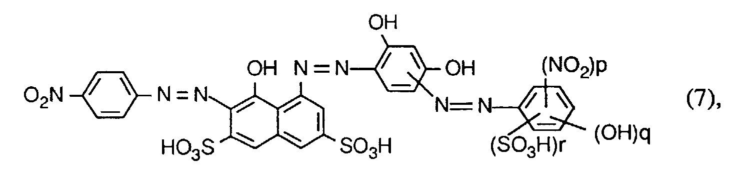 in which p is 1 or 2 and q and r, independently of one another, are each 0 or 1, or a brown dye of the formula 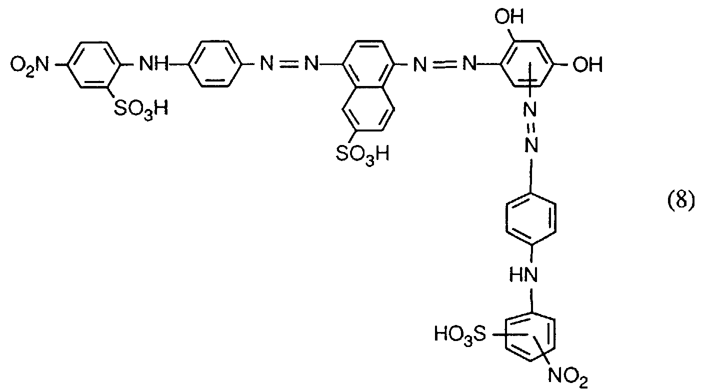 is additionally used.

23. A process according to any one of claims 1 to 21, wherein a black dye of the formula 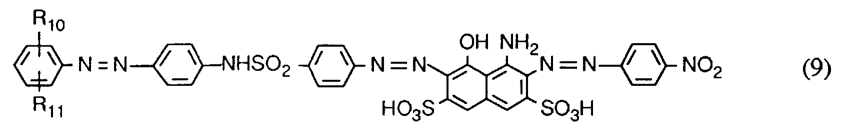 or 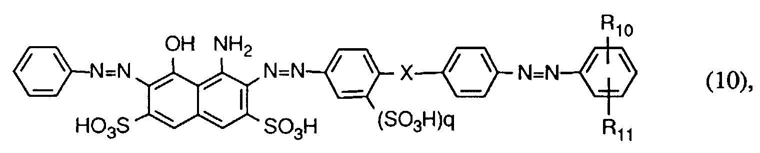 in which R₁₀ and R₁₁, independently of one another, are each OH or NH₂, X is -NH- or -NHCO- and q is 0 or 1, is additionally used.

24. A process according to claim 22, wherein a brown dye of the formula 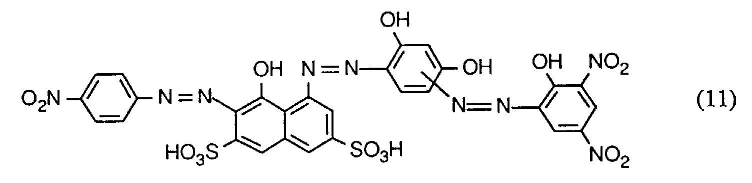 or 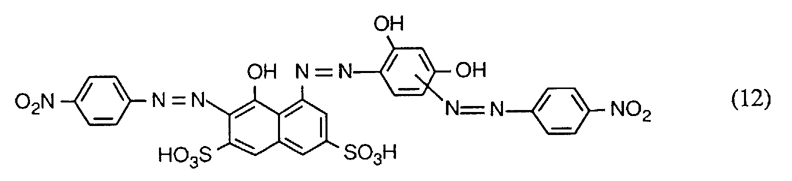 or 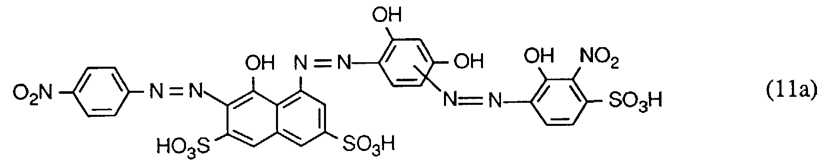 or 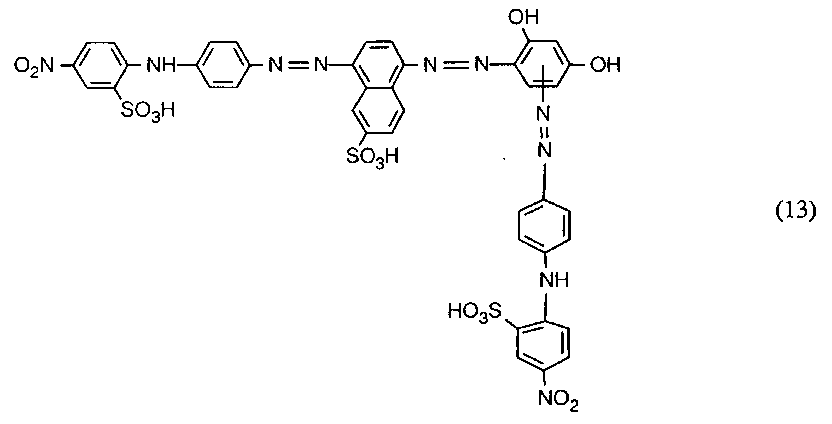 is additionally used.

25. A process according to claim 23, wherein a black dye of the formula 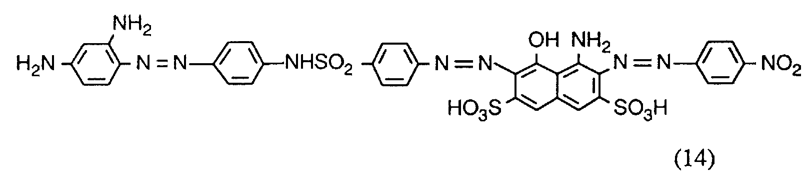 or 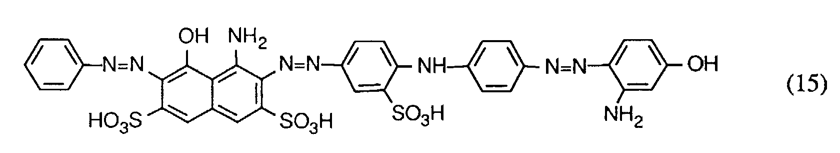 or 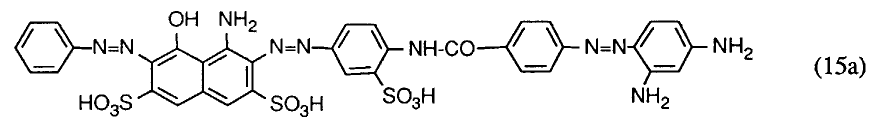 is additionally used.

26. A process according to claims 1, 2, 7, 17 and 21, wherein a dye mixture comprising the yellow dye of the formula (4), the red dye of the formula (5) and the blue dye of the formula (6) is used for trichromatic dyeing.

27. A process according to any one of claims 1 to 26, wherein a dye liquor is used which additionally contains a colour-intensifying auxiliary.

28. A process according to claim 27, wherein a dye liquor is used which contains an ethoxylated alkylamine as the colour-intensifying auxiliary.

29. A trichromatic dye mixture comprising at least one yellow dye of the formula (1), at least one red dye of the formula (2) or (2a) and at least one blue dye of the formula (3) according to claim 1.

30. A trichromatic dye mixture according to claim 29, comprising 1 to 98% by weight of a yellow dye of the formula (1), 1 to 98% by weight of a red dye of the formula (2) or (2a) and 1 to 98% by weight of a blue dye of the formula (3).

31. A trichromatic dye mixture according to claim 30, comprising 10 to 70% by weight of a yellow dye of the formula (1), 10 to 50% by weight of a red dye of the formula (2) and 10 to 50% by weight of a blue dye of the formula (3).

32. Leather dyed by the process according to claims 1 to 28 or with a trichromatic dye mixture according to claims 29 to 31.

## Revendications

1. Procédé pour la teinture du cuir avec des mélanges de colorants, caractérisé en ce que l'on utilisé un mélange contenant au moins deux colorants exempts de métaux, choisis dans le groupe formé par
a) un colorant jaune de formule 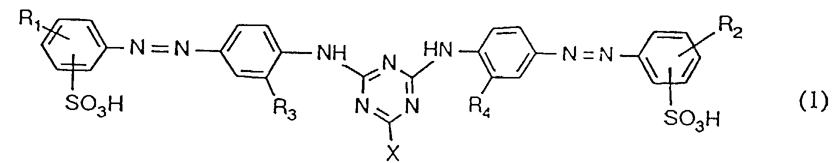 dans laquelle
R₁ et R₂ représentent, indépendamment l'un de l'autre, chacun un atome d'hydrogène, un groupe alkyle en C₁₋₄ ou alcoxy en C₁₋₄,
R₃ et R₄ représentent, indépendamment l'un de l'autre, chacun un groupe alkyle en C₁₋₄ ou alcoxy en C₁₋₄, et
X représente un atome d'halogène ou un groupe 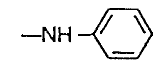 où le résidu phényle peut être non substitué ou porter un substituant alkyle en C₁₋₄ ou alcoxy en C₁₋₄,
b) un colorant rouge de formule 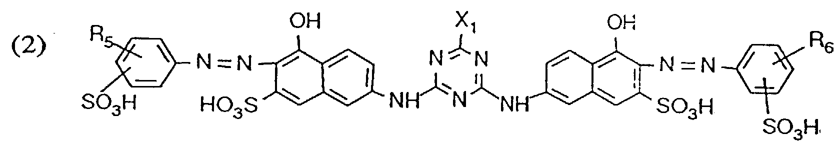 dans laquelle R₅ et R₆ représentent, indépendamment l'un de l'autre, chacun un atome d'hydrogène, un groupe alkyle en C₁₋₄ ou alcoxy en C₁₋₄, et X₁ représente un atome d'halogène ou un groupe 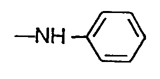 où le résidu phényle peut être non substitué ou porter un substituant alkyle en C₁₋₄ ou alcoxy en C₁₋₄, ou de formule 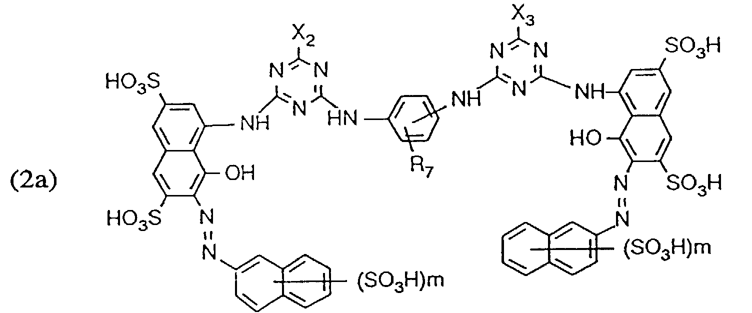 dans laquelle
X₂ et X₃ représentent, indépendamment l'un de l'autre, chacun un atome d'halogène ou un groupe
où le résidu phényle peut être non substitué ou porter un substituant alkyle en C₁₋₄ ou alcoxy en C₁₋₄,
R₇ représente un atome d'hydrogène, un groupe alkyle en C₁₋₄ ou alcoxy en C₁₋₄, et
m vaut 1 ou 2, et
c) un colorant bleu de formule 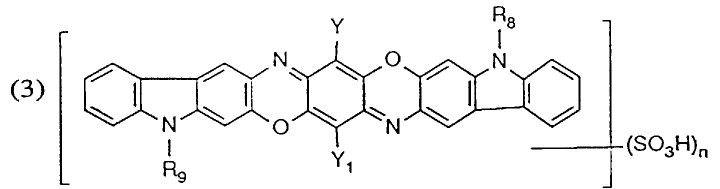 dans laquelle
n vaut 3 ou 4,
R₈ et R₉ représentent, indépendamment l'un de l'autre, chacun un atome d'hydrogène ou un groupe alkyle en C₁₋₄,
Y et Y₁ représentent, indépendamment l'un de l'autre, chacun un atome d'hydrogène, un atome d'halogène, un groupe alkyle en C₁₋₄, alcoxy en C₁₋₄, phényle ou phénoxy, le résidu phényle de ces deux derniers groupes pouvant être substitué par un groupe alkyle en C₁₋₄ ou alcoxy en C₁₋₄.

2. Procédé conforme à la revendication 1, caractérisé en ce que l'on utilise pour la teinture en trichromie un mélange de colorant contenant un colorant jaune de formule (1), un colorant rouge de formule (2) ou (2a) et un colorant bleu de formule (3).

3. Procédé conforme aux revendications 1 et 2, caractérisé en ce que l'on utilise un colorant jaune de formule (1) dans lequel R₁ est identique à R₂.

4. Procédé conforme à une des revendications 1 à 3, caractérisé en ce que l'on utilise un colorant jaune de formule (1) dans lequel R₁ et R₂ représentent chacun un atome d'hydrogène, un groupe méthyle ou méthoxy, en particulier un atome d'hydrogène.

5. Procédé conforme à une des revendications 1 à 4, caractérisé en ce que l'on utilise un colorant jaune de formule (1) dans lequel les deux groupes sulfo sont en position méta par rapport aux ponts azo.

6. Procédé conforme à une des revendications 1 à 5, caractérisé en ce que l'on utilise un colorant jaune de formule (1) dans lequel X est un atome chlore ou surtout un groupe phénylamino.

7. Procédé conforme à une des revendications 1 à 6, caractérisé en ce que l'on utilise un colorant jaune de formule

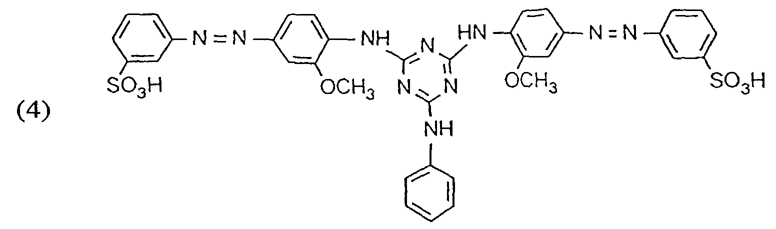

8. Procédé conforme à une des revendications 1 à 7, caractérisé en ce que l'on utilise un colorant rouge de formule (2) dans lequel R₅ est identique à R₆.

9. Procédé conforme à une des revendications 1 à 8, caractérisé en ce que l'on utilise un colorant rouge de formule (2) dans lequel R₅ et R₆ représentent tous les deux un atome d'hydrogène, un résidu méthyle ou méthoxy, surtout un résidu méthoxy.

10. Procédé conforme à une des revendications 1 à 9, caractérisé en ce que l'on utilise un colorant rouge de formule (2) dans lequel les deux groupes sulfo se trouvent en position ortho par rapport aux groupes azo.

11. Procédé conforme à une des revendications 1 à 10, caractérisé en ce que l'on utilise un colorant rouge de formule (2) dans lequel X₁ représente un résidu phénylamino ou un résidu phénylamino portant un substituant méthyle, éthyle, méthoxy ou éthoxy, en particulier un résidu méthoxyphénylamino.

12. Procédé conforme à une des revendications 1 à 7, caractérisé en ce que l'on utilise un colorant rouge de formule (2a) dans lequel R₇ est un atome d'hydrogène.

13. Procédé conforme à une des revendications 1 à 7 ou 12, caractérisé en ce que l'on utilise un colorant rouge de formule (2a) dans lequel les deux groupes triazine-amino sont liés en position para du noyau phénylène portant le substituant R₇.

14. Procédé conforme à une des revendications 1 à 7, 12 ou 13, caractérisé en ce que l'on utilise un colorant rouge de formule (2a) dans lequel X₂ et X₃ sont identiques.

15. Procédé conforme à une des revendications 1 à 7 ou 12 à 14, caractérisé en ce que l'on utilise un colorant rouge de formule (2a) dans lequel X₂ et X₃ représentent chacun un atome de chlore.

16. Procédé conforme à une des revendications 1 à 7 ou 12 à 15, caractérisé en ce que l'on utilise un colorant rouge de formule (2a) dans lequel m = 2.

17. Procédé conforme à une des revendications 1 à 16, caractérisé en ce que l'on utilise un colorant rouge de formule 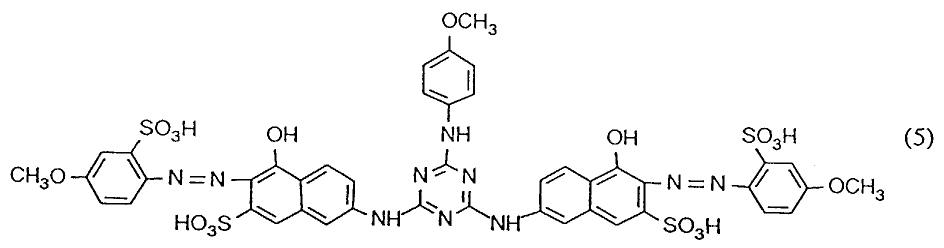 ou

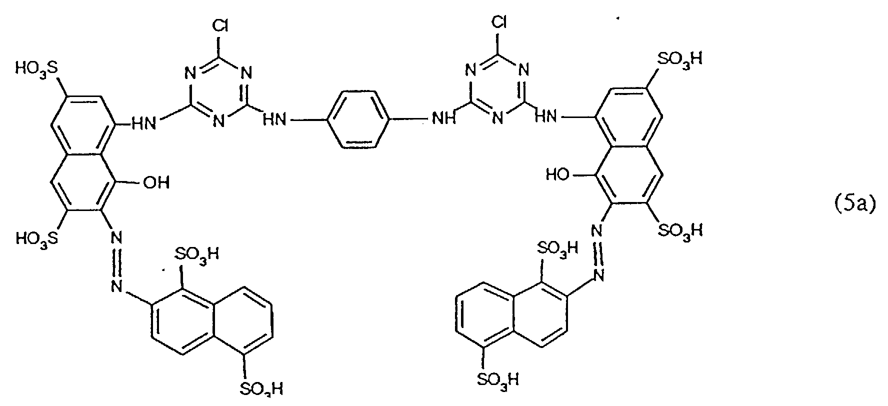

18. Procédé conforme à une des revendications 1 à 17, caractérisé en ce que l'on utilise un colorant bleu de formule (3) dans lequel R₈ et R₉ représentent chacun un résidu alkyle en C₁₋₂.

19. Procédé conforme à une des revendications 1 à 18, caractérisé en ce que l'on utilise un colorant bleu de formule (3) dans lequel Y et Y₁ représentent chacun un atome d'halogène, surtout un atome de chlore.

20. Procédé conforme à une des revendications 1 à 19, caractérisé en ce que l'on utilise un colorant bleu de formule (3) dans lequel n = 3.

21. Procédé conforme à une des revendications 1 à 20, caractérisé en ce que l'on utilise un colorant bleu de formule

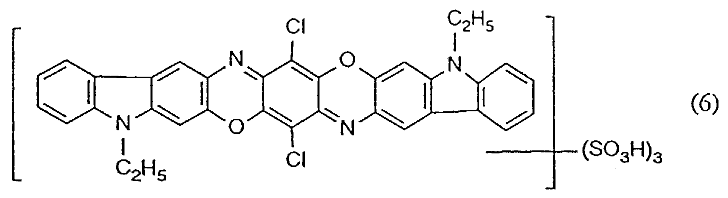

22. Procédé conforme à une des revendications 1 à 21, caractérisé en ce que l'on utilise en plus un colorant marron de formule 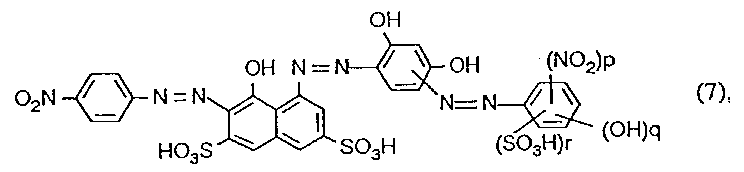 dans lequel p vaut 1 ou 2 et q et r valent, indépendamment l'un de l'autre, 0 ou 1, ou un colorant marron de formule

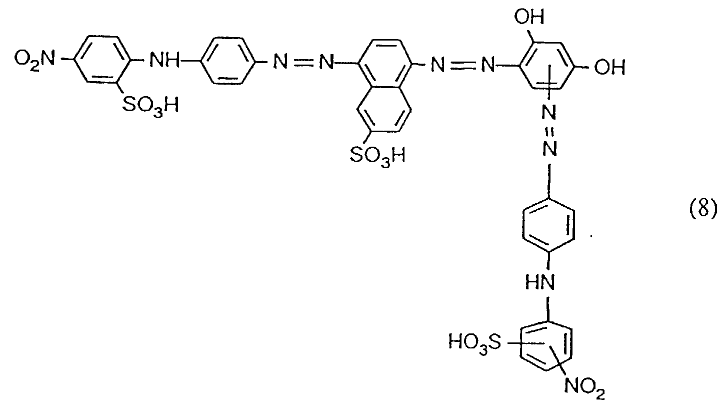

23. Procédé conforme à une des revendications 1 à 21, caractérisé en ce que l'on utilise en plus un colorant noir de formule 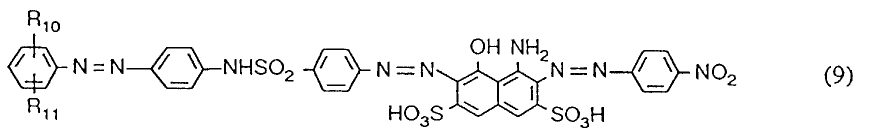 ou 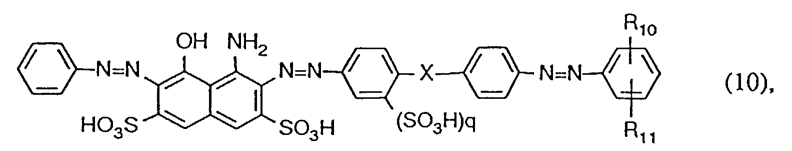 dans lesquelles R₁₀ et R₁₁ représentent, indépendamment l'un de l'autre, un résidu OH ou NH₂, X est un résidu -NH- ou -NHCO- et q vaut 0 ou 1.

24. Procédé conforme à la revendication 22, caractérisé en ce que l'on utilise en plus un colorant marron de formule 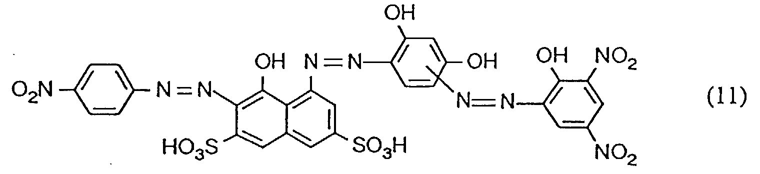 ou 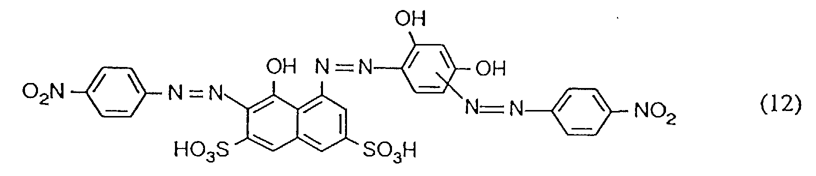 ou 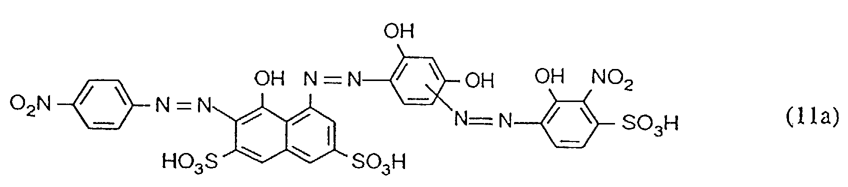 ou

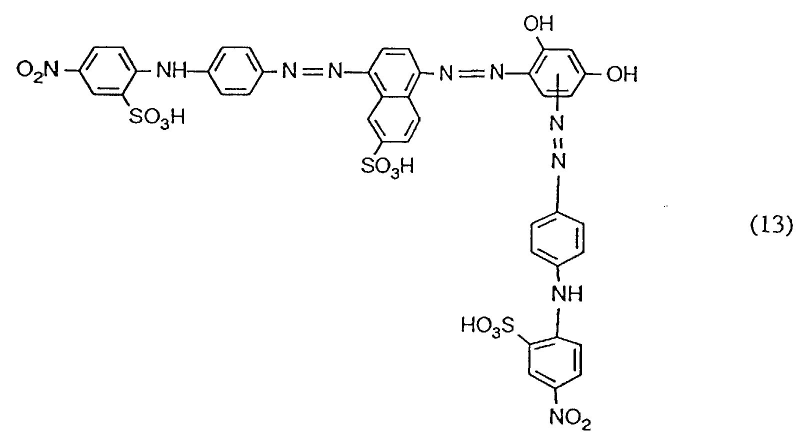

25. Procédé conforme à la revendication 23, caractérisé en ce que l'on utilise en plus un colorant noir de formule 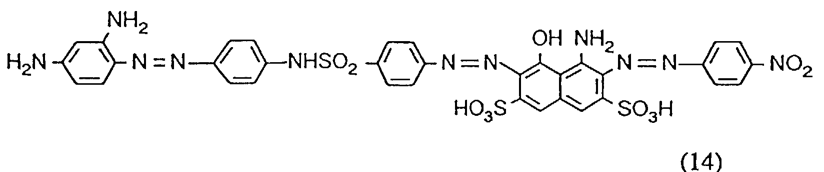 ou 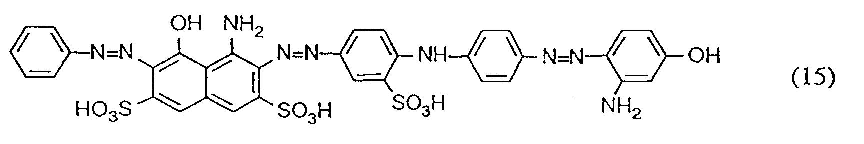 ou

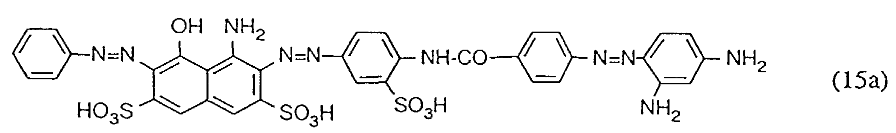

26. Procédé conforme aux revendications 1, 2, 7, 17 et 21, caractérisé en ce que l'on utilise pour la teinture en trichromie un mélange de colorants contenant un colorant jaune de formule (4), un colorant rouge de formule (5) et un colorant bleu de formule (6).

27. Procédé conforme à une des revendications 1 à 26, caractérisé en ce que l'on utilise un bain de teinture contenant en plus un agent de renforcement de la couleur.

28. Procédé conforme à la revendication 27, caractérisé en ce que l'on utilise un bain de teinture contenant, comme agent de renforcement de la couleur, une alkylamine éthoxylée.

29. Mélange de colorants pour la teinture en trichromie contenant au moins un colorant jaune de formule (1), au moins un colorant rouge de formule (2) ou (2a) et au moins un colorant bleu de formule (3) conformes à la revendications 2.

30. Mélange de colorants pour la teinture en trichromie conforme à la revendication 29, contenant de 1 à 98 % en poids d'un colorant jaune de formule (1), de 1 à 98 % en poids d'un colorant rouge de formule (2) ou (2a) et de 1 à 98 % en poids d'un colorant bleu de formule (3).

31. Mélange de colorants pour la teinture en trichromie conforme à la revendication 30 contenant en particulier de 10 à 70 % en poids d'un colorant jaune de formule (1), de 10 à 50 % en poids d'un colorant rouge de formule (2) et de 10 à 50 % en poids d'un colorant bleu de formule (3).

32. Cuir teint selon le procédé conforme aux revendications 1 à 28 ou à l'aide des mélanges de colorants pour la teinture en trichromie conformes aux revendications 29 à 31.
